# EUROPEAN PATENT SPECIFICATION

(11) **EP 3 266 844 B1**
(45) Date of publication and mention of the grant of the patent: **27.03.2019**
(21) Application number: 17189090.8
(22) Date of filing: 12.02.2016
(51) Int. Cl.: C09J 7/00

(54) **ADHESIVE TAPE CARTRIDGE AND ADHESIVE TAPE ROLL**
KLEBEBANDKARTUSCHE UND KLEBEBANDROLLE
CARTOUCHE DE BANDE ADHÉSIVE ET ROULEAU DE RUBAN ADHÉSIF

(30) Priority: 31.03.2015 JP 2015071991
(43) Date of publication of application: 10.01.2018
(62) Divisional of application: 16155534.7
(73) Proprietor: Brother Kogyo Kabushiki Kaisha, Nagoya, Aichi 467-8561 (JP)
(72) Inventor: NORIMATSU, Takahiro, Nagoya-shi, Aichi (JP); SATOH, Noriaki, Nagoya-shi, Aichi (JP); SUITO, Yoshikatsu, Nagoya-shi, Aichi (JP)
(74) Representative: J A Kemp

(56) References cited:
- EP-A1- 1 803 575
- EP-A2- 2 565 246

## Description

### TECHNICAL FIELD

The present invention relates to an adhesive tape cartridge including an adhesive tape roll having a wound double-sided adhesive tape and the adhesive tape roll.

### BACKGROUND ART

EP 1803 575 A describes a print cassette comprising a double-sided adhesive tape composing a print tape. The double-sided adhesive tape from which a release paper is removed so that a second-sided adhesive layer is exposed, can be adhered to an adherend. The second-sided adhesive layer which is in contact with the adherend is made of an acid-free adhesive (containing no unsaturated carboxylic acid). An adhesive tape cartridge is already known that includes an adhesive tape roll having a wound double-sided adhesive tape (see, e.g., JP, A, 2013-82789). In this prior art, the double-sided adhesive tape includes a film layer (base film), a first adhesive layer disposed on this film layer on one side in the thickness direction, a second adhesive layer disposed on the film layer on the other side in the thickness direction, and a separation material layer (separation sheet) covering the second adhesive layer on the other side in the thickness direction.

### DISCLOSURE OF THE INVENTION

### Problem to be Solved by the Invention

As described above, the prior art includes four layers, i.e., the first adhesive layer, the film layer, the second adhesive layer, and the separation material layer. If it is desired to form a color tape having a desired color in this configuration, a print layer for color development must separately be disposed between the film layer and the adhesive layer, for example. In this case, the four-layer structure is increased by one layer into a five-layer structure, resulting in an increase in tape thickness. As a result, it is difficult to increase a length of a tape capable of being wound around the adhesive tape roll in a limited space in a cartridge housing.

It is an object of the present invention to provide an adhesive tape cartridge and an adhesive tape roll included therein capable of increasing a length of a tape capable of being wound around the adhesive tape roll by achieving an adhesive tape in various colors without increasing the number of layers included in the tape.

In order to achieve the above-described object, according to the present invention, there is provided an adhesive tape cartridge as defined in appended claim 1.

In the present invention of this application, a pearl pigment and a solid pigment is added to the first adhesive layer. The film layer is transparent or semitransparent. As a result, for example, even when the pigment is added to the second adhesive layer side, a color developed by the pigment can visibly be recognized from the first adhesive layer side. By adding the pigment to the adhesive layer for color development, as compared to the case of separately disposing a print layer for color development between the film layer and the adhesive layer, an adhesive tape can be achieved in various colors while reducing the number of layers included in the tape. As a result, since the tape thickness can be reduced, the length of the tape wound around the adhesive tape roll can be increased in a limited space in the housing.

### ADVANTAGES OF THE INVENTION

The present invention can increase a length of a tape capable of being wound around the adhesive tape roll by achieving an adhesive tape in various colors without increasing the number of layers included in the tape.

### BRIEF DESCRIPTION OF DRAWINGS

Fig. 1 is a perspective view of an exterior appearance on the front side of a print label producing apparatus on which an adhesive tape cartridge of a first embodiment of the present invention is mounted.
Fig. 2 is a plane view of an internal structure on the rear side of an apparatus main body.
Fig. 3 is an explanatory view of layer configurations of a print-receiving tape and a double-sided adhesive tape.
Fig. 4A is an explanatory view of a layer configuration of a print tape.
Fig. 4B is an explanatory view of a layer configuration of a print tape.
Fig. 5 is an explanatory view of a layer configuration of a double-sided adhesive tape of a modification example of adding a solid pigment.
Fig. 6 is an explanatory view of a layer configuration of a double-sided adhesive tape of a modification example of adding a pearl pigment and a solid pigment.
Fig. 7 is an explanatory view of a layer configuration of a double-sided adhesive tape of a modification example of adding a red pearl pigment.
Fig. 8 is an explanatory view of a layer configuration of a double-sided adhesive tape of a modification example of adding a red pearl pigment and a yellow solid pigment.
Fig. 9 is an explanatory view of a layer configuration of a double-sided adhesive tape of an adhesive tape cartridge of a second embodiment of the present invention.
Fig. 10 is an explanatory view of a layer configuration of a double-sided adhesive tape of a modification example of adding a solid pigment.
Fig. 11 is an explanatory view of a layer configuration of a double-sided adhesive tape of a modification example of adding a pearl pigment and a solid pigment.
Fig. 12 is an explanatory view of a layer configuration of a double-sided adhesive tape of an adhesive tape cartridge of a third embodiment of the present invention.
Fig. 13 is an explanatory view of a layer configuration of a double-sided adhesive tape of a modification example of adding a solid pigment.
Fig. 14 is an explanatory view of a layer configuration of a double-sided adhesive tape of a modification example of adding a solid pigment on one side and a pearl pigment on the other side.
Fig. 15 is an explanatory view of a layer configuration of a double-sided adhesive tape of a modification example of adding a pearl pigment on one side and a similar color solid pigment on the other side.
Fig. 16 is an explanatory view of a layer configuration of a double-sided adhesive tape of a modification example of adding the pearl pigment and the solid pigment on one side and a similar solid color pigment on the other side.
Fig. 17 is an explanatory view of a layer configuration of a double-sided adhesive tape of a modification example of adding a black solid pigment on the other side.
Fig. 18 is an explanatory view of a layer configuration of a double-sided adhesive tape of a modification example of further adding a pearl pigment and a solid pigment on one side.

### BEST MODE FOR CARRYING OUT THE INVENTION

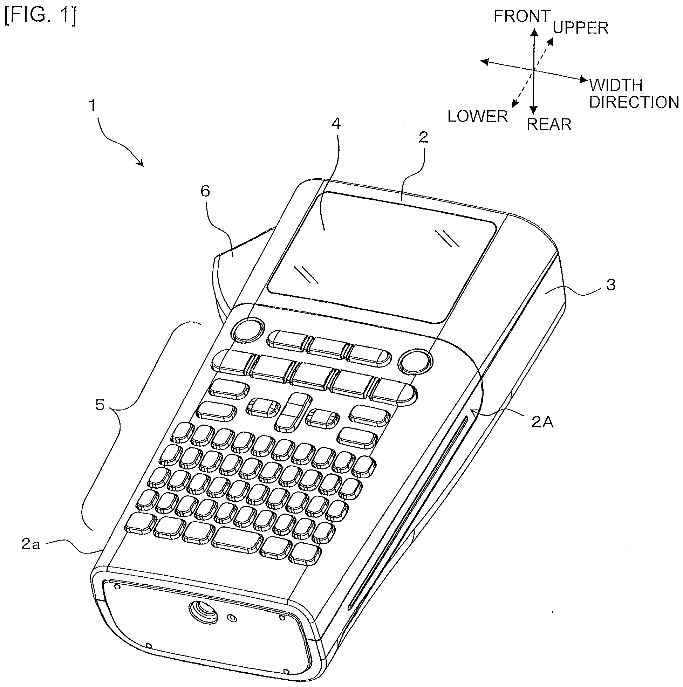

Embodiments of the present invention will now be described with reference to the drawings. "Upper," "lower," "front," "rear," and "width" used in the following description in terms of a print label producing apparatus 1 correspond to directions of respective arrows shown in the figures including Fig. 1, and "thickness" used in terms of the print label producing apparatus 1 refers to a thickness in the front-rear direction.

### <First Embodiment>

A first embodiment of the present invention will be described with reference to Figs. 1 to 8.

### <Overall Structure of Print Label Producing Apparatus>

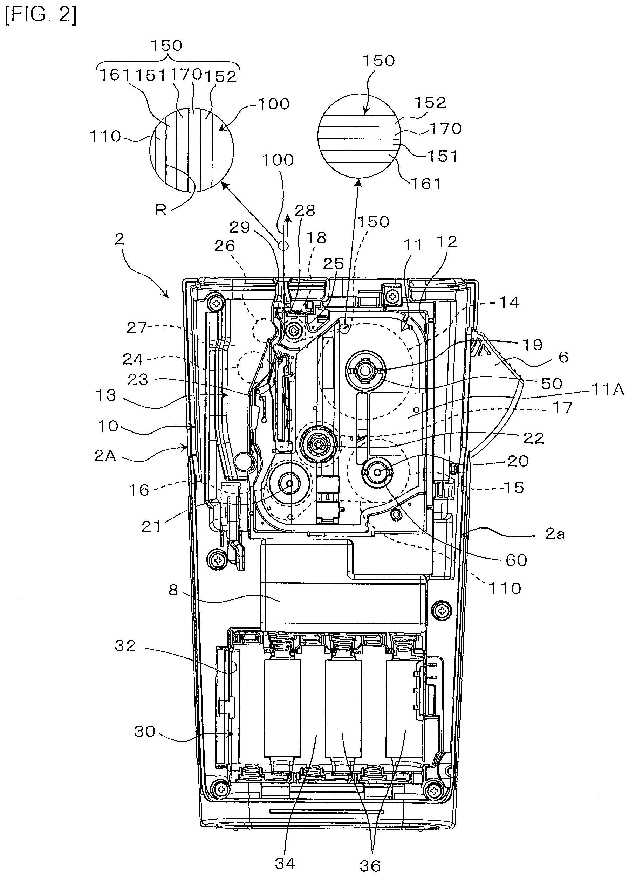

Figs. 1 and 2 show an example of a print label producing apparatus on which an adhesive tape cartridge of this embodiment is mounted. In Fig. 1 and Fig. 2, the print label producing apparatus 1 is a handy type electronic device held by a user's hand. The print label producing apparatus 1 includes an apparatus body 2 and a cover 3 detachably attached to a rear surface of the apparatus body 2.

The apparatus body 2 has a housing 2A having a thin and flat substantially rectangular parallelepiped shape elongated in the up-down direction and a front surface of the housing 2A is disposed with a liquid crystal display part 4 for displaying print data, a setting screen, etc. on an upper part and a keyboard part 5 for operating the print label producing apparatus 1 on the lower side of the liquid crystal display part 4. The keyboard part 5 has keys arranged thereon including character keys of characters, signs, numeric characters, etc. as well as function keys. A cut operation lever 6 for cutting a label tape with print is disposed on an upper part of a side wall part 2a of the housing 2A on one side in the width direction (the left side in Fig. 1, the right side in Fig. 2).

### <Label Producing Mechanism of Print Label Producing Apparatus>

As shown in Fig. 2, the above described apparatus body 2 includes a label producing part 10 and a battery storage part 30. The label producing part 10 and the battery storage part 30 are partitioned by a containing part containing a control substrate, a motor, etc. not shown. The battery storage part 30 has a rectangular recessed part 32, and a plurality of shallow recessed parts 36 in the up-down direction is disposed on a bottom 34 of the recessed part 32 along the width direction. The battery storage part 30 stores therein the same number of multiple dry-cell batteries not shown in each of two upper and lower stages.

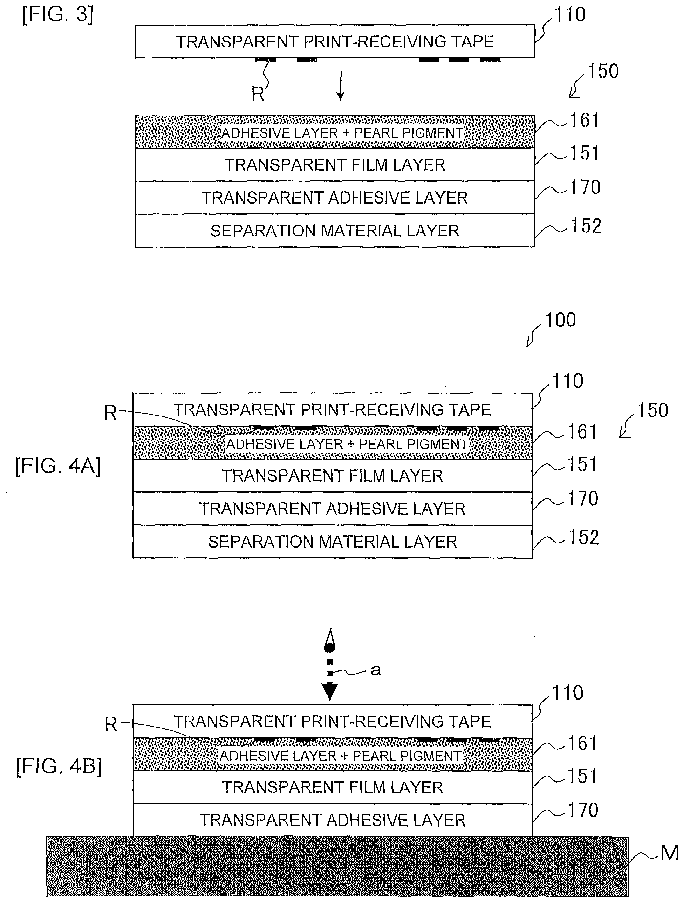

The label producing part 10 includes a concave-shaped cartridge holder 12 for detachably mounting an adhesive tape cartridge 11 (hereinafter also simply referred to as the "cartridge 11") disposed to occupy a large portion of a substantially upper half of the apparatus body 2, and a printing/feeding mechanism 13 disposed in a region including the above described other side in the width direction (the left side in Fig. 2) of the cartridge holder 12. As shown in Fig. 2, the cartridge 11 includes an adhesive tape roll 14, a roll of print-receiving tape 15, an ink ribbon roll 16, an ink ribbon take-up roller 17, and a feeding roller 18 inside a housing 11A. An adhesive tape roll 14 includes a double-sided adhesive tape 150 wound around an outer periphery of a spool 50. In other words, the double-sided adhesive tape 150 is wound around a support shaft 19 as an axis. As shown in an enlarged view in Fig. 2, the double-sided adhesive tape 150 includes an adhesive layer 161, a film layer 151, an adhesive layer 170, and a separation material layer 152 laminated in this order from the spool 50 located on the radial center side (corresponding to the upper side shown in Fig. 3 described later) toward the radial outside (corresponding to the lower side in Fig. 3 described later). As shown in Fig. 2, the roll of print-receiving tape 15 includes a print-receiving tape 110 (transparent in this example) wound around a spool 60.

The printing/feeding mechanism 13 includes the above-described support shaft 19 of the above described adhesive tape roll 14, a support shaft 20 of the above described roll of print-receiving tape 15, a support shaft 21 of the above described ink ribbon roll 16, a drive shaft 22 of the above described ink ribbon take-up roller 17, a thermal head 23, a platen roller 24, a drive shaft 25 of the above described feeding roller 18, a pressure roller 26, etc. The above described platen roller 24 and the pressure roller 26 are attached together to the roll holder 27 and can be switched by swinging of the roll holder 27 between a printing/feeding position (position shown in Fig. 2) causing contact with the thermal head 23 and the feeding roller 18, respectively, and a standby position (not shown) away from the thermal head 23 and the feeding roller 18.

When a print label is produced, the platen roller 24 and the pressure roller 26 are switched to the above described printing/feeding position. The platen roller 24 switched to the printing/feeding position is driven to rotate by a drive shaft not shown on the apparatus body 2 side and presses the print-receiving tape 110 fed out from the roll of print-receiving tape 15 and an ink ribbon not shown fed out from the ink ribbon roll 16 against the thermal head 23. As a result, the thermal head 23 performs a desired print R on the print-receiving tape 110, and the platen roller 24 feeds the print-receiving tape 110 and the ink ribbon after the print toward the feeding roller 18. The ink ribbon after the print is subsequently separated from the print-receiving tape 110 and taken up by the ink ribbon take-up roller 17.

On the other hand, the pressure roller 26 switched to the printing/feeding position presses the print-completed print-receiving tape 110 fed by the platen roller 24 and the double-sided adhesive tape 150 fed out from the adhesive tape roll 14 against the feeding roller 18 driven to rotate by the drive shaft 25. As a result, as shown in an enlarged view in Fig. 2 (see also Fig. 3 and Fig. 4 described later), while the print-receiving tape 110 having the above described print R formed thereon and the double-sided adhesive tape 150 are bonded to form a print tape 100, the feeding roller 18 feeds the print tape 100 toward a label discharging exit 29 disposed to an upper end of the apparatus body 2. When a user manually operates the cut operation lever 6 at a desired timing of discharge of the print tape 100 from the label discharging exit 29, a cutter 28 located in the vicinity of the label discharging exit 29 is actuated to cut the print tape 100, so that the print tape 100 of a desired length (i.e., a print label) is formed.

### <Details of Layer Configuration of Tape>

Fig. 3 is an explanatory view of layer configurations of the above described print-receiving tape 110 and the above described double-sided adhesive tape 150.

As shown in Fig. 3, the double-sided adhesive tape 150 has the above described transparent film layer 151, the adhesive layer 161 containing a pearl pigment (described in detail later) disposed on a surface of the film layer 151 on one side in the thickness direction (the upper side in Fig. 3), the adhesive layer 170 disposed on a surface of the film layer 151 on the other side in the thickness direction (the lower side in Fig. 3) opposite to the above described adhesive layer 161, and the separation material layer 152 disposed on a surface of the adhesive layer 170 on the above described other side in the thickness direction. The known pearl pigment (described in detail later) is added to the above described adhesive layer 161. The above described adhesive layer 170 is made of an adhesive that is a transparent (or may be semitransparent). The above described film layer 151 includes a colorless and transparent film or may include a semitransparent film having transmissive color, for example.

The print-receiving tape 110 has the print R formed on a surface on the side (the lower side in Fig. 3) facing the double-sided adhesive tape 150. The print-receiving tape 110 is bonded via the adhesive layer 161 to the double-sided adhesive tape 150.

Fig. 4A shows a layer configuration of the above described print tape 100 formed by bonding the above described print-receiving tape 110 and the above described double-sided adhesive tape 150. As a result of the above described bonding, as shown in Fig. 4A, the print tape 100 includes the print-receiving tape 110, the above described adhesive layer 161, the film layer 151, the adhesive layer 170, and the separation material layer 152 laminated in this order from one side in the thickness direction (the upper side in Fig. 4A) toward the other side in the thickness direction (the lower side in Fig. 4A).

The above described separation material layer 152 is formed by coating a base material with a separation agent, for example. The base material can be made of paper, a PET film, an OPP film, a polyethylene film, etc. The separation agent can be made of a silicone resin, a polyethylene resin, etc.

The adhesives of the above described adhesive layer 161 and the above described adhesive layer 170 can be urethane resin-based, silicone resin-based, vinyl resin-based, polyester resin-based, synthetic rubber-based, and natural rubber-based adhesives etc.

The above described pearl pigment added to the above described adhesive layer 161 can be made by coating a surface of a core material such as scale-like mica, glass, and aluminum with a color material such as a titanium oxide and an iron oxide or a solid pigment as a color material. For some color tone of the pearl pigment, those creating color from interference of reflected light of the core material are usable without coating the core material with the color material.

The above described solid pigment in this case can be an inorganic pigment such as an oxide or an organic pigment such as a textile printing pigment. Examples of the inorganic pigment can include oxides such as titanium dioxide and zinc flower; hydroxides such as alumina white and yellow iron oxide; sulfides such as zinc sulfide and lithopone; chromium oxides such as chrome yellow and molybdate orange; silicates such as white carbon and clay; sulfates such as precipitated barium sulfate and baryta powder; carbonates such as calcium carbonate and white lead; and other pigments such as ferrocyanide (Prussian blue) and carbon (carbon black). Examples of the organic pigment can include textile printing pigments including basic dyes such as rhodamine lake and methyl violet lake, acid dyes such as quinoline yellow lake, vat dyes such as malachite green, and mordant dyes such as alizalin lake; azo pigments including soluble azo such as Carmine 6B, insoluble azo such as disazo yellow, condensed azo such as Cromophtal Yellow 3G, azo complex salt such as nickel azo yellow, and benzimidazolone azo such as Permanent Orange HL; phthalocyanine pigments such as phthalocyanine blue; condensed polycyclic pigments such as flavanthron yellow; nitro pigments such as Naphthol Yellow S; nitroso pigment such as pigment green B; day/night fluorescent pigments such as Lumogen yellow; and other pigments such as alkali blue.

The materials/components making up the tapes described above are commonly used in modification examples and other embodiments described later.

### <Effect of First Embodiment>

According to the first embodiment described above, the double-sided adhesive tape 150 of the adhesive tape roll 14 disposed on the adhesive tape cartridge 11 has the pigment added to at least one of the adhesive layer 161 disposed on the surface of the film layer 151 on one side in the thickness direction and the adhesive layer 170 disposed on the surface on the other side in the thickness direction (in this example, the adhesive layer 161 on the one side). Because of color development of the pigment in the adhesive layer 161, as compared to the case of separately disposing a print layer for color development between the film layer 151 and the adhesive layer 161 or between the film layer 151 and the adhesive layer 170, the double-sided adhesive tape 150 can be achieved in various colors while reducing the number of layers included in the double-sided adhesive tape 150. As a result, since the tape thickness of the double-sided adhesive tape 150 can be reduced, the tape length of the double-sided adhesive tape 150 wound around the double-sided adhesive tape roll 14 can be increased in a limited space in the housing 11A of the cartridge 11.

The addition of a pigment to an adhesive layer normally slightly weakens an adhesive force. Particularly in this embodiment, the pigment is added to the adhesive layer 161 between the adhesive layer 161 and the adhesive layer 170. As a result, roles can be shared such that importance is attached to the color development in the above described adhesive layer 161 for bonding the print-receiving tape 110 while attaching importance to the adhesive force in the adhesive layer 170 for affixing the print label to an adherend M (see Fig. 4B described later). Therefore, in this example, an affixing adhesive force can reliably be acquired when the produced print tape 100 is affixed via the adhesive layer 170 to the adherend M while allowing a slight reduction in a bonding adhesive force between the print-receiving tape 110 and the double-sided adhesive tape 150. By using the pearl pigment in the adhesive layer 161, a metallic feel (glossy feel) can be represented in the color development in the adhesive layer 161.

Particularly in this embodiment, the adhesive layer 170 is made of a transparent adhesive. As a result, when the print label is affixed to the adherend M with the separation material layer 152 peeled off before use as shown in Fig. 4B and is visually recognized from the upper side of Fig. 4B (i.e., from the side of the transparent print-receiving tape 110), the color of the adherend M can be utilized via the above described transparent film layer 151 and the adhesive layer 170 as a background color of the color development having a metallic feel (glossy feel) of the pearl pigment in the adhesive layer 161 (see an arrow a in Fig. 4B). As a result, color expression ability can further reliably be enhanced.

Particularly in this embodiment, the print-receiving tape 110 is bonded to the surface of the adhesive layer 161 on one side in the thickness direction. By covering the surface of the adhesive layer 161 with the print-receiving tape 110, the color developed by the above described pearl pigment contained in the adhesive layer 161 can be protected to keep the tone of color for a longer time.

### <Modification Examples of First Embodiment>

The above described first embodiment is not limited to the above described form and may variously be modified without departing from the technical ideas thereof. Such modification examples will hereinafter be described in order.

### (1-1) Case of Adding Solid Pigment

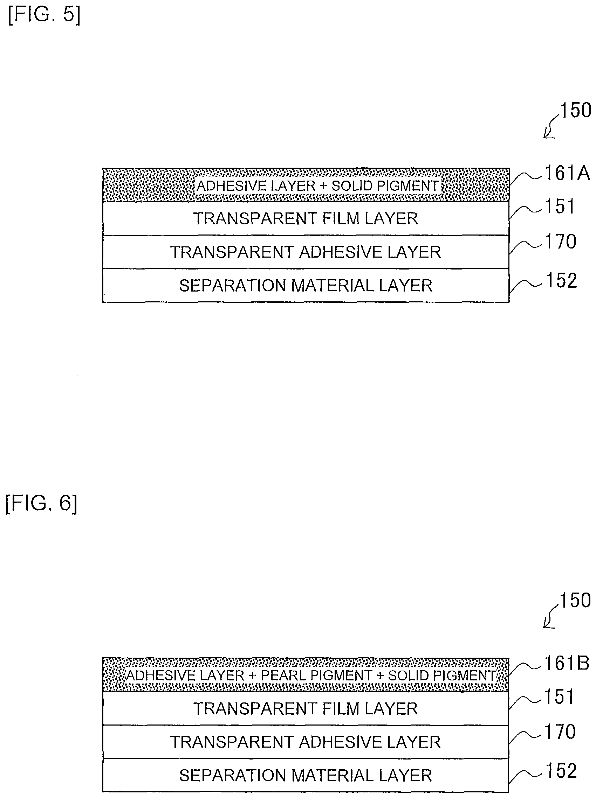

Specifically, a solid pigment may be added instead of the above described pearl pigment in the above described first embodiment. As shown in Fig. 5 , the double-sided adhesive tape 150 of this modification example has the solid pigment added to an adhesive layer 161A disposed on the surface of the film layer 151 on one side in the thickness direction (the upper side of Fig. 5).

This modification example provides the same effect as the above described first embodiment.

### (1-2) Case of Adding Pearl Pigment and Solid Pigment (invention)

Specifically, both the pearl pigment and the solid pigment are added instead of adding only the above described pearl pigment in the above described first embodiment. As shown in Fig. 6 , the double-sided adhesive tape 150 of this modification example has the pearl pigment and the solid pigment added to an adhesive layer 161B disposed on the surface of the film layer 151 on one side of the thickness direction (the upper side of Fig. 6).

This modification example provides the same effect as the above described first embodiment. Additionally, by mixing and using the pearl pigment and the solid pigment, for example, a deep metallic feel (glossy feel) can be represented and various colors can be developed in the color development in the adhesive layer 161B while compensating for shortcomings of the pearl pigment originally having a small number of colors.

### (1-3) Case of Adding Red Pearl Pigment

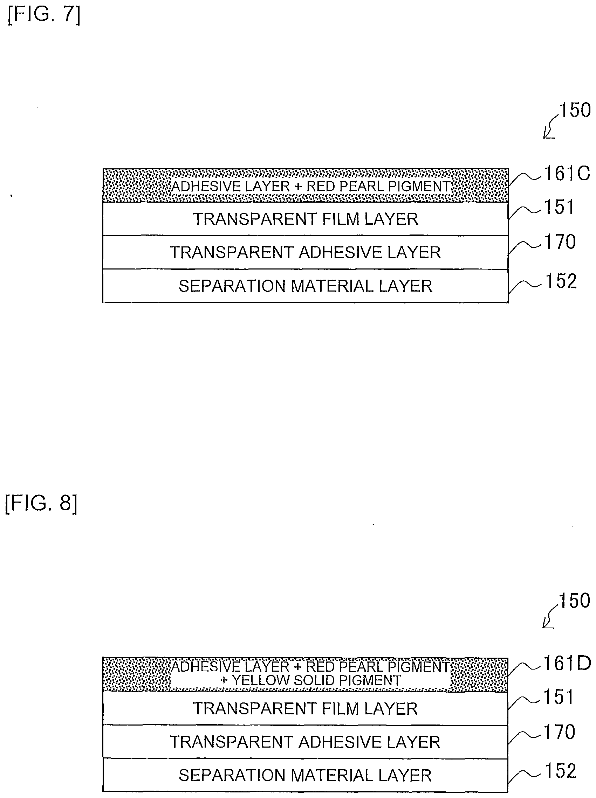

Specifically, a red pearl pigment may particularly be added for the above described pearl pigment in the above described first embodiment. As shown in Fig. 7 , the double-sided adhesive tape 150 of this modification example has the red pearl pigment added to an adhesive layer 161C on the film layer 151 on one side in the thickness direction (the upper side of Fig. 7).

This modification example provides the same effect as the above described first embodiment. Particularly, when the tape is affixed to the adherend M described above, the pigment in the adhesive layer 161C can develop a color with a reddish metallic feel (glossy feel) while utilizing the color of the adherend M as a background color.

### (1-4) Case of Adding Red Pearl Pigment and Yellow Solid Pigment

Specifically, both a red pearl pigment and a yellow solid pigment may be added instead of adding only the above described red pearl pigment in the above described modification example (1-3). As shown in Fig. 8, the double-sided adhesive tape 150 of this modification example has the red pearl pigment and the yellow solid pigment added to an adhesive layer 161D on the film layer 151 on one side in the thickness direction (the upper side of Fig. 8).

This modification example provides the same effect as the above described first embodiment. Particularly, when the tape is affixed to the adherend M described above, a deep metallic feel (glossy feel) tinted with a mixed color of red and yellow can be represented by mixing and using the red pearl pigment and the yellow solid pigment while utilizing the color of the adherend M as a background color. As a result, color expression ability can further reliably be enhanced.

### <Second Embodiment>

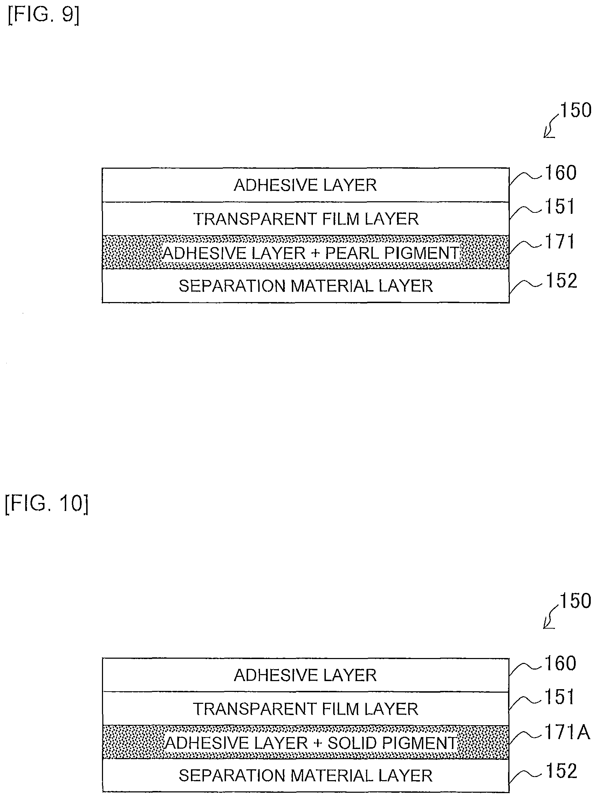

A second embodiment of the present invention will be described with reference to Figs. 9 to 11. In this second embodiment, instead of adding the pigment to the adhesive layer 161 on the transparent film 151 on one side in the thickness direction (the upper side of the figures) in the above described first embodiment, the pigment is added to the adhesive layer 171 on the transparent film 151 on the other side in the thickness direction (the lower side of the figures). The portions equivalent to those of the above described first embodiment and the modification examples thereof are denoted by the same reference numerals and will not be described or will be described in a simplified manner as needed.

As shown in Fig. 9 corresponding to Fig. 3 of the above described first embodiment, the double-sided adhesive tape 150 of this embodiment has the film layer 151 same as the above described first embodiment, an adhesive layer 160 disposed on a surface of the film layer 151 on one side in the thickness direction (the upper side in Fig. 9), an adhesive layer 171 containing a pigment disposed on a surface of the film layer 151 on the other side in the thickness direction (the lower side in Fig. 9), and the separation material layer 152 same as the above described first embodiment disposed on a surface of the adhesive layer 171 on the above described other side in the thickness direction opposite to the above described adhesive layer 160. The pearl pigment described above is added to the above described adhesive layer 171. The above described adhesive layer 160 is made of an adhesive that is a transparent (or may be semitransparent).

### <Effect of Second Embodiment>

According to the above described second embodiment, the double-sided adhesive tape 150 of the adhesive tape roll 14 disposed on the adhesive tape cartridge 11 has the pigment added to at least one of the adhesive layer 160 disposed on the surface of the film layer 151 on one side in the thickness direction and the adhesive layer 171 disposed on the surface on the other side in the thickness direction (in this example, the adhesive layer 171 on the other side). In this case, the film layer 151 includes a transparent film that is colorless and transparent. As a result, even though the above described pigment is added to the above described adhesive layer 171 disposed on the film layer 151 on the other side in the thickness direction, the color developed by the pigment can visually be recognized from the adhesive layer 160 side. As a result, as is the case with the above described first embodiment, as compared to the case of separately disposing a print layer for color development between the film layer 151 and the adhesive layer 160 or between the film layer 151 and the adhesive layer 171, the double-sided adhesive tape 150 can be achieved in various colors while reducing the number of layers included in the double-sided adhesive tape 150. As a result, since the tape thickness of the double-sided adhesive tape 150 can be reduced, the tape length of the double-sided adhesive tape 150 wound around the double-sided adhesive tape roll 14 can be increased in a limited space in the housing 11A of the cartridge 11.

As described above, the addition of a pigment to an adhesive layer normally slightly weakens an adhesive force. Particularly in this embodiment, the pigment is added to the adhesive layer 171 between the adhesive layer 160 and the adhesive layer 171. As a result, roles can be shared such that importance is attached to the color development in the adhesive layer 171 for affixing the print label to the adherend M (see Fig. 4B described above) while attaching importance to the adhesive force in the above described adhesive layer 160 for bonding the print-receiving tape 110. Therefore, in this example, an affixing adhesive force can reliably be acquired between the print-receiving tape 110 and the double-sided adhesive tape 150. By using the pearl pigment in the adhesive layer 171, a metallic feel (glossy feel) can be represented in the color development in the adhesive layer 171.

Particularly in this embodiment, the above described adhesive layer 160 is made of a transparent adhesive. As a result, when the print label is affixed to the adherend M with the separation material layer 152 peeled off before use as shown in Fig. 4B described above and is visually recognized (from the side of the transparent print-receiving tape 110), the color of the adherend M can be utilized via the above described transparent film layer 151 and the adhesive layer 160 as a background color of the color development having a metallic feel (glossy feel) of the pearl pigment in the adhesive layer 171 (see the arrow a in Fig. 4B described above). As a result, color expression ability can further reliably be enhanced.

### <Modification Examples of Second Embodiment>

The above described second embodiment is not limited to the above described form and may variously be modified without departing from the spirit and the technical ideas thereof. Such modification examples will hereinafter be described in order.

### (2-1) Case of Adding Solid Pigment

Specifically, a solid pigment may be added instead of the above described pearl pigment in the above described second embodiment. As shown in Fig. 10, the double-sided adhesive tape 150 of this modification example has the solid pigment added to an adhesive layer 171A disposed on the surface of the film layer 151 on the other side in the thickness direction (the lower side of Fig. 10).

This modification example provides the same effect as the above described second embodiment.

### (2-2) Case of Adding Pearl Pigment and Solid Pigment

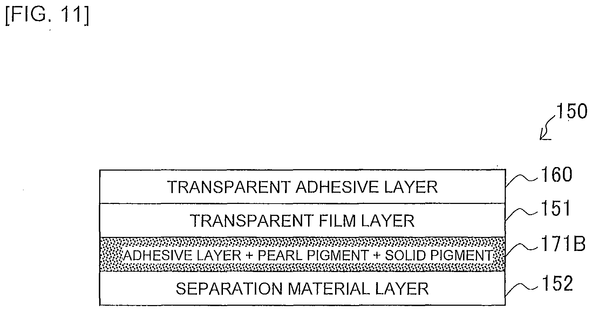

Specifically, both the pearl pigment and the solid pigment may be added instead of adding only the above described pearl pigment in the above described second embodiment. As shown in Fig. 11, the double-sided adhesive tape 150 of this modification example has the pearl pigment and the solid pigment added to an adhesive layer 171B on the film layer 151 on the other side in the thickness direction (the lower side of Fig. 11).

This modification example provides the same effect as the above described second embodiment. Additionally, by mixing and using the pearl pigment and the solid pigment, for example, a deep metallic feel (glossy feel) can be represented and various colors can be developed in the color development in the adhesive layer 171B while compensating for shortcomings of the pearl pigment originally having a small number of colors.

### <Third Embodiment>

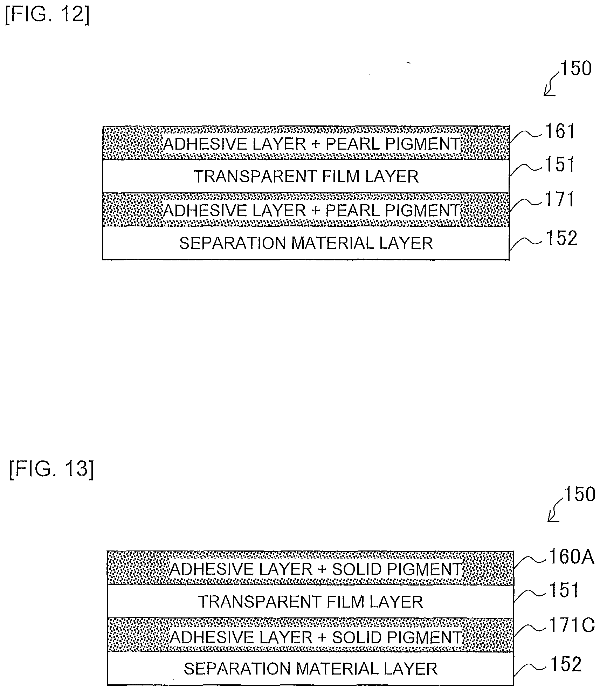

A third embodiment of the present invention will be described with reference to Figs. 12 to 18. In this third embodiment, the pigment is added to the both adhesive layers on the transparent film 151 on one side in the thickness direction (the upper side of the figures) and the other side in the thickness direction (the lower side of the figures). The portions equivalent to those of the above described first and second embodiments and the modification examples thereof are denoted by the same reference numerals and will not be described or will be described in a simplified manner as needed.

As shown in Fig. 12 corresponding to Fig. 3 of the above described first embodiment and Fig. 9 of the second embodiment, the double-sided adhesive tape 150 of this embodiment has the film layer 151 same as the above described first embodiment, the adhesive layer 161 containing a pigment disposed on a surface of the film layer 151 on one side in the thickness direction (the upper side in Fig. 12), the adhesive layer 171 containing a pigment disposed on a surface of the film layer 151 on the other side in the thickness direction (the lower side in Fig. 12) opposite to the above described adhesive layer 161, the separation material layer 152 same as the above described first and second embodiments disposed on a surface of the adhesive layer 171 on the above described other side in the thickness direction. The pearl pigment described above is added to the above described adhesive layer 161 and the adhesive layer 171.

### <Effect of Third Embodiment>

According to the above described third embodiment, the double-sided adhesive tape 150 of the adhesive tape roll 14 disposed on the adhesive tape cartridge 11 has the pigment added to at least one of the adhesive layer 161 disposed on the surface of the film layer 151 on one side in the thickness direction and the adhesive layer 171 disposed on the surface on the other side in the thickness direction (in this example, the adhesive layers 161, 171 on the both sides). As a result, as is the case with the above described first and second embodiments, as compared to the case of separately disposing a print layer for color development between the film layer 151 and the adhesive layer 161 or between the film layer 151 and the adhesive layer 171, the double-sided adhesive tape 150 can be achieved in various colors while reducing the number of layers included in the double-sided adhesive tape 150. As a result, since the tape thickness of the double-sided adhesive tape 150 can be reduced, the tape length of the double-sided adhesive tape 150 wound around the double-sided adhesive tape roll 14 can be increased in a limited space in the housing 11A of the cartridge 11. Since the pigment is added to both the adhesive layer 161 and the adhesive layer 171, the reduction in adhesive force due to addition of the pigment as described above can be distributed to the adhesive layer 161 and the adhesive layer 171.

Particularly in this embodiment, since the pearl pigment is separately allocated to the two adhesive layers 161, 171, the pearl pigment can be adjusted in an allocation ratio etc. to represent various forms of the metallic feel (glossy feel) and to compensate for shortcomings of the pearl pigment originally having a small number of colors.

Particularly in this embodiment, as is the case with the above described first embodiment, since the surface of the adhesive layer 161 is covered with the print-receiving tape 110 at the time of bonding with the print-receiving tape 110, the color developed by the above described pearl pigment contained in the adhesive layer 161 can be protected to keep the tone of color for a longer time.

### <Modification Example of Third Embodiment>

The above described third embodiment is not limited to the above described form and may variously be modified without departing from the technical ideas thereof. Such modification examples will hereinafter be described in order.

### (3-1) Case of Adding Solid Pigment

Specifically, a solid pigment may be added instead of the pearl pigment added to each of the adhesive layers on one side (the upper side shown in the figures) and the other side (the lower side shown in the figures) in the thickness direction in the above described third embodiment. As shown in Fig. 13 , the double-sided adhesive tape 150 of this modification example has a solid pigment added to an adhesive layer 160A disposed on the surface of the film layer 151 on one side in the thickness direction and the solid pigment is added also to an adhesive layer 171C disposed on the surface on the other side in the thickness direction.

In this modification example, as is the case with the above described third embodiment, the tape thickness of the double-sided adhesive tape 150 can be reduced, and the reduction in adhesive force due to addition of the pigment can be distributed to the adhesive layer 160A and the adhesive layer 171C. Additionally, as is the case with the above described third embodiment, the solid pigment can be adjusted in an allocation ratio etc. to easily represent various forms of color tones, and the surface of the adhesive layer 160A can be covered with the print-receiving tape 110 to protect the color developed by the solid pigment.

### (3-2) Case of Adding Solid Pigment on One Side and Pearl Pigment on the Other Side

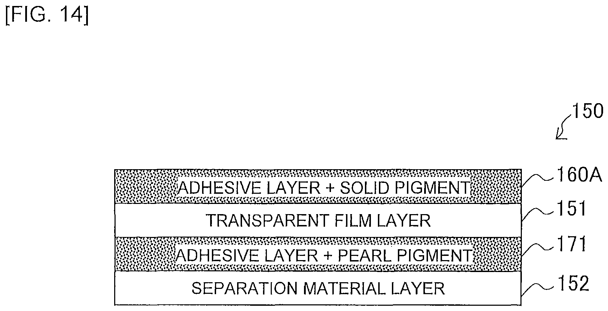

Specifically, a solid pigment may be added instead of the pearl pigment added to the adhesive layer on the one side in the thickness direction (the upper side in the figures) in the above described third embodiment. As shown in Fig. 14, the double-sided adhesive tape 150 of this modification example has a solid pigment added to the adhesive layer 160A disposed on the surface of the film layer 151 on the one side in the thickness direction. As is the case with the above described third embodiment of Fig. 12, the pearl pigment is added to the adhesive layer 171 disposed on the surface on the other side in the thickness direction.

In this modification example, as is the case with the above described third embodiment, the tape thickness of the double-sided adhesive tape 150 can be reduced, and the reduction in adhesive force due to addition of the pigment can be distributed to the adhesive layer 160A and the adhesive layer 171. Additionally, the surface of the adhesive layer 160A can be covered with the print-receiving tape 110 to protect the color developed by the solid pigment.

### (3-3) Case of Adding Pearl Pigment on One Side and Similar Color Solid Pigment on the Other Side

Specifically, a solid pigment may be added instead of the pearl pigment added to the adhesive layer on the other side in the thickness direction (the lower side of the figures) in the above described third embodiment. In this case, the solid pigment has a color similar to the pearl pigment added to the adhesive layer on the one side in the thickness direction (the upper side of the figures).

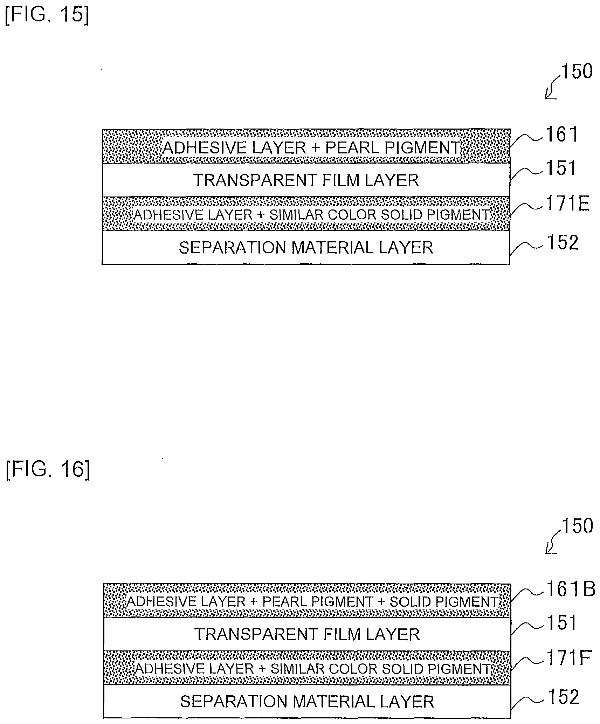

As shown in Fig. 15, the double-sided adhesive tape 150 of this modification example has the pearl pigment added to the adhesive layer 161 disposed on the surface of the film layer 151 on the one side in the thickness direction as is the case with the above described third embodiment, while the solid pigment of a color similar to the above described pearl pigment of the above described adhesive layer 161 on the one side is added to an adhesive layer 171E on the other side in the thickness direction.

In this modification example, as is the case with the above described third embodiment, the tape thickness of the double-sided adhesive tape 150 can be reduced, and the reduction in adhesive force due to addition of the pigment can be distributed to the adhesive layer 161 and the adhesive layer 171E, and the surface of the adhesive layer 161 can be covered with the print-receiving tape 110 to protect the color developed by the pearl pigment. Additionally, by using the similar color development of the solid pigment on the adhesive layer 171E side as the background (foundation) of the color development with a metallic feel in the adhesive layer 161, the metallic feel (glossy feel) can be emphasized.

### (3-4) Case of Adding Pearl Pigment and Solid Pigment on one side and Similar Color Solid Pigment on the Other Side

A layer configuration of the double-sided adhesive tape 150 of this modification example is shown in Fig. 16. As shown in Fig. 16, the double-sided adhesive tape 150 of this modification example has the pearl pigment and the solid pigment added to the adhesive layer 161B disposed on the surface of the film layer 151 on one side in the thickness direction, and a solid pigment of a color similar to the mixed color of the pearl pigment and the solid pigment in the above described adhesive layer 161B is added to an adhesive layer 171F disposed on the surface on the other side in the thickness direction.

In this modification example, as is the case with the above described third embodiment, the tape thickness of the double-sided adhesive tape 150 can be reduced, and the reduction in adhesive force due to addition of the pigment can be distributed to the adhesive layer 161B and the adhesive layer 171F, and the surface of the adhesive layer 161B can be covered with the print-receiving tape 110 to protect the development of the mixed color of the pearl pigment and the solid pigment. Additionally, by achieving the mixed color of the pearl pigment and the solid pigment in the adhesive layer 161 and using the development of the similar color of the solid pigment on the adhesive layer 171F side as the background (foundation) of the development of the above described mixed color, hue and texture can variously be adjusted.

### (3-5) Case of Adding Black Solid Pigment on the Other Side

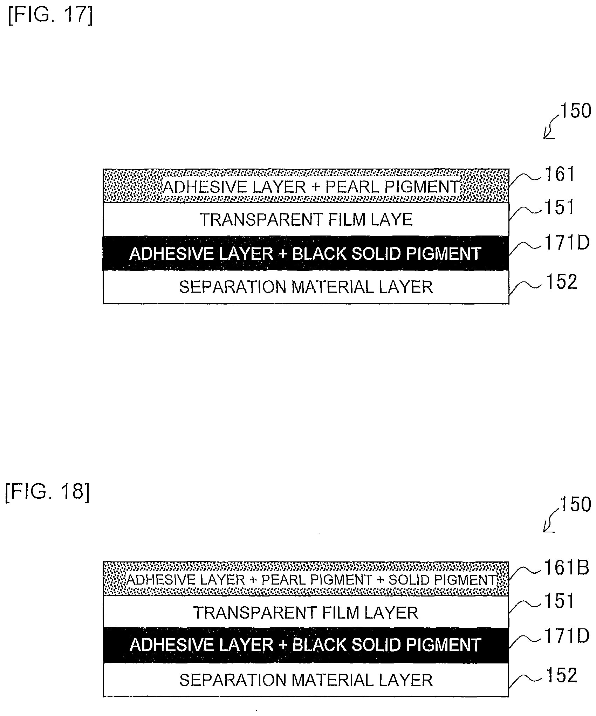

A layer configuration of the double-sided adhesive tape 150 of this modification example is shown in Fig. 17. As shown in Fig. 17, the double-sided adhesive tape 150 of this modification example has the pearl pigment added to the above described adhesive layer 161 disposed on the surface of the film layer 151 on the one side in the thickness direction (the upper side in Fig. 17) as is the case with the above described third embodiment, while a black solid pigment is added to an adhesive layer 171D disposed on the surface of the film layer 151 on the other side in the thickness direction (the lower side in Fig. 12).

In this modification example, as is the case with the above described third embodiment, the tape thickness of the double-sided adhesive tape 150 can be reduced, and the reduction in adhesive force due to addition of the pigment can be distributed to the adhesive layer 161 and the adhesive layer 171F, and the surface of the adhesive layer 161 can be covered with the print-receiving tape 110 to protect the color developed by the pearl pigment. Additionally, since the background color is black, the metallic feel from the color development in the adhesive layer 161 can reliably be emphasized.

### (3-6) Case of Further Adding Pearl Pigment and Solid Pigment on One Side

A layer configuration of the double-sided adhesive tape 150 of this modification example is shown in Fig. 18. As shown in Fig. 18, instead of adding only the pearl pigment to the adhesive layer disposed on the surface of film layer 151 on the above described one side in the thickness direction in the double-sided adhesive tape 150 of the above described modification example (3-5), the double-sided adhesive tape 150 of this modification example has both the pearl pigment and the solid pigment added to the adhesive layer 161B disposed on the surface on the above described one side in the thickness direction .

In this modification example, as is the case with the above described third embodiment, the tape thickness of the double-sided adhesive tape 150 can be reduced, and the reduction in adhesive force due to addition of the pigment can be distributed to the adhesive layer 161B and the adhesive layer 171D, and the surface of the adhesive layer 161B can be covered with the print-receiving tape 110 to protect the development of the mixed color of the pearl pigment and the solid pigment. Additionally, since the background color is black as is the case with the above described modification example (3-5), the metallic feel from the color development in the adhesive layer 161B can reliably be emphasized.

### (4) Others

The techniques of the embodiment and the modification examples may appropriately be utilized in combination other than those described above.

## Claims

1. An adhesive tape cartridge (11) comprising:
a housing (11A); and
an adhesive tape roll (14) with a double-sided adhesive tape (150) wound around an axis in said housing (11A);
said double-sided adhesive tape (150) having, in cross section:
a transparent or semitransparent film layer (151);
a first adhesive layer (161B; 161D) disposed on one surface of said film layer (151);
a second adhesive layer (170) disposed on an opposite surface of said film layer (151);
a separation material layer (152) disposed on one surface of said second adhesive layer (170);
a pearl pigment and a solid pigment added to said first adhesive layer (161B; 161D); and
a print-receiving tape roll (15) with a print-receiving tape (110) to be bonded with said first adhesive layer (161B; 161D) of said double-sided adhesive tape (150), said print- receiving tape (110) being wound around an axis.

2. The adhesive tape cartridge (11) according to claim 1, wherein
said second adhesive layer (170) is transparent or semitransparent.

3. The adhesive tape cartridge (11) according to claim 1, wherein
a solid pigment is added to said second adhesive layer (170).

4. The adhesive tape cartridge (11) according to claim 3, wherein
said solid pigment having a black color is added to said second adhesive layer (170).

5. The adhesive tape cartridge (11) according to claim 1, wherein
the pearl pigment added to said first adhesive layer (161D) is a red pearl pigment.

6. The adhesive tape cartridge (11) according to claim 1 or 5 wherein
the solid pigment added to said first adhesive layer (161D) is a yellow pigment.

7. The adhesive tape cartridge (11) according to claim 1, wherein
the pearl pigment and the solid pigment are added to said first adhesive layer (161B) and said second adhesive layer (170) has a solid pigment of a color similar to a mixed color of the pearl pigment and the solid pigment in said first adhesive layer (161B).

8. The adhesive tape cartridge (11) according to claim 1 wherein any pigment is not added to said second adhesive layer (161B; 161D).

9. An adhesive tape roll (14) provided in the adhesive tape cartridge according to anyone of claims 1 to 7, wherein
the adhesive tape roll (14) comprises a spool (50) having an outer periphery around which said double-sided adhesive tape (150) is wound.

## Patentansprüche

1. Klebebandkartusche (11), umfassend:
ein Gehäuse (11A); und
eine Klebebandrolle (14) mit einem doppelseitigen Klebeband (150), das um eine Achse in dem Gehäuse (11A) gewunden ist;
wobei das doppelseitige Klebeband (150) im Querschnitt Folgendes hat:
eine transparente oder semitransparente Filmschicht (151);
eine erste Klebeschicht (161B; 161D), die an einer Oberfläche der Filmschicht (151) angeordnet ist;
eine zweite Klebeschicht (170), die an einer gegenüberliegenden Oberfläche der Filmschicht (151) angeordnet ist;
eine Trennmaterialschicht (152), die an einer Oberfläche der zweiten Klebeschicht (170) angeordnet ist;
ein Perlglanzpigment und ein festes Pigment, die der ersten Klebeschicht (161B; 161D) hinzugefügt werden; und
eine Druckaufnahme-Klebebandrolle (15) mit einem Druckaufnahmeband (110), das mit der ersten Klebeschicht (161B; 161D) des doppelseitigen Klebebands (150) verbunden wird, wobei das Druckaufnahmeband (110) um eine Achse gewunden ist.

2. Klebebandkartusche (11) nach Anspruch 1, wobei
die zweite Klebeschicht (170) transparent oder semitransparent ist.

3. Klebebandkartusche (11) nach Anspruch 1, wobei
ein festes Pigment zu der zweiten Klebeschicht (170) hinzugefügt wird.

4. Klebebandkartusche (11) nach Anspruch 3, wobei
das feste Pigment mit einer schwarzen Farbe zu der zweiten Klebeschicht (170) hinzugefügt wird.

5. Klebebandkartusche (11) nach Anspruch 1, wobei
das Perlglanzpigment, das zu der ersten Klebeschicht (161D) hinzugefügt wird, ein rotes Perlglanzpigment ist.

6. Klebebandkartusche (11) nach Anspruch 1 oder 5, wobei
das feste Pigment, das zu der ersten Klebeschicht (161D) hinzugefügt wird, ein gelbes Pigment ist.

7. Klebebandkartusche (11) nach Anspruch 1, wobei
das Perlglanzpigment und das feste Pigment zu der ersten Klebeschicht (161B) hinzugefügt werden und die zweite Klebeschicht (170) ein festes Pigment mit einer Farbe hat, die ähnlich einer gemischten Farbe des Perlglanzpigments und des festen Pigments in der ersten Klebeschicht (161B) ist.

8. Klebebandkartusche (11) nach Anspruch 1, wobei zu der zweiten Klebeschicht (161B; 161D) kein Pigment hinzugefügt wird.

9. Klebebandrolle (14), die in der Klebebandkartusche nach einem der Ansprüche 1 bis 7 bereitgestellt ist, wobei
die Klebebandrolle (14) eine Spule (50) umfasst, die einen Außenumfang hat, um den das doppelseitige Klebeband (150) gewunden ist.

## Revendications

1. Cartouche de ruban adhésif (11) comprenant :
un boîtier (11A) ; et
un rouleau de ruban adhésif (14) avec un ruban adhésif double face (150) enroulé autour d'un axe dans ledit boîtier (11A) ;
ledit ruban adhésif double face (150) comportant, en section transversale :
une couche de film transparent ou semi-transparent (151) ;
une première couche adhésive (161B ; 161D) disposée sur une surface de ladite couche de film (151) ;
une deuxième couche adhésive (170) disposée sur une surface opposée de ladite couche de film (151) ;
une couche de matériau de séparation (152) disposée sur une surface de ladite deuxième couche adhésive (170) ;
un pigment nacré et un pigment solide ajoutés à ladite première couche adhésive (161B ; 161D) ; et
un rouleau de ruban récepteur d'impression (15) avec un ruban récepteur d'impression (110) devant être relié à ladite première couche adhésive (161B ; 161D) dudit ruban adhésif double face (150), ledit ruban récepteur d'impression (110) étant enroulé autour d'un axe.

2. Cartouche de ruban adhésif (11) selon la revendication 1, dans laquelle
ladite deuxième couche adhésive (170) est transparente ou semi-transparente.

3. Cartouche de ruban adhésif (11) selon la revendication 1, dans laquelle
un pigment solide est ajouté à ladite deuxième couche adhésive (170).

4. Cartouche de ruban adhésif (11) selon la revendication 3, dans laquelle
ledit pigment solide présentant une couleur noire est ajouté à ladite deuxième couche adhésive (170).

5. Cartouche de ruban adhésif (11) selon la revendication 1, dans laquelle
le pigment nacré ajouté à ladite première couche adhésive (161D) est un pigment nacré rouge.

6. Cartouche de ruban adhésif (11) selon la revendication 1 ou 5, dans laquelle
le pigment solide ajouté à ladite première couche adhésive (161D) est un pigment jaune.

7. Cartouche de ruban adhésif (11) selon la revendication 1, dans laquelle
le pigment nacré et le pigment solide sont ajoutés à ladite première couche adhésive (161B) et ladite deuxième couche adhésive (170) présente un pigment solide d'une couleur similaire à une couleur mixte du pigment nacré et du pigment solide dans ladite première couche adhésive (161B).

8. Cartouche de ruban adhésif (11) selon la revendication 1, dans laquelle un quelconque pigment n'est pas ajouté à ladite deuxième couche adhésive (161B ; 161D).

9. Rouleau de ruban adhésif (14) disposé dans la cartouche de ruban adhésif selon l'une quelconque des revendications 1 à 7, dans lequel
le rouleau de ruban adhésif (14) comprend une bobine (50) présentant une périphérie externe autour de laquelle ledit ruban adhésif double face (150) est enroulé.
